Europäisches Patentamt

European Patent Office

Office européen des brevets

(19)

(11) **EP 0 844 499 A2**

(12) **EUROPÄISCHE PATENTANMELDUNG**

(43) Veröffentlichungstag:
27.05.1998  Patentblatt 1998/22

(51) Int. Cl.$^6$: **G01V 3/10**

(21) Anmeldenummer: 97116619.4

(22) Anmeldetag: 24.09.1997

(84) Benannte Vertragsstaaten:
**AT BE CH DE DK ES FI FR GB GR IE IT LI LU MC NL PT SE**

(30) Priorität: **26.11.1996 DE 19648834**

(71) Anmelder:
**Institut Dr. Friedrich Förster
Prüfgerätebau GmbH & Co. KG
72766 Reutlingen (DE)**

(72) Erfinder:
**Patzwaldt, Wolfgang, Dipl.-Phys.
72766 Reutlingen (DE)**

(74) Vertreter:
**Patentanwälte
Ruff, Beier, Schöndorf und Mütschele
Willy-Brandt-Strasse 28
70173 Stuttgart (DE)**

(54) **Verfahren zum Betrieb und zur Auswertung von Signalen einer Wirbelstromsonde und Vorrichtung zur Ausübung des Verfahrens**

(57)    Es wird ein Verfahren zum Betrieb und zur Auswertung von Signalen einer Wirbelstromsonde beschrieben. Eine Sendespule wird mit Wechselstrom mit vorzugsweise drei Frequenzkomponenten beaufschlagt. Das einer Wechselspannung entsprechende Spulensignal der Empfängerspule wird in entsprechende Frequenzanteile zerlegt und es werden durch phasengesteuerte Gleichrichtung Projektionssignale gebildet, die einem Realteil oder einem Imaginärteil des Spulensignals entsprechen. Aus mindestens zwei gegebenenfalls individuell verstärkten Projektionssignalen der gleichen Art (Real- oder Imaginärsignal) werden Differenzsignale gebildet. Schließlich wird durch Kombination von mindestens zwei Differenzsignalen ein Kombinationssignal gebildet und dieses wird ausgewertet. Insbesondere werden Quotienten und Betragssummen von Differenzsignalen gebildet. Das Verfahren bietet für die Minensuche entscheidende Vorteile bei der Unterdrückung von störenden Bodensignalen und bei der Identifizierung und Klassifizierung von Minen allein aufgrund von Signalen einer Wirbelstromsonde. Das Verfahren ermöglicht auch die Verwendung einer Wirbelstromsonde als Bodensonde.

Fig.2

Printed by Xerox (UK) Business Services
2.16.3/3.4

EP 0 844 499 A2

**Beschreibung**

Die Erfindung betrifft ein Verfahren zum Betrieb und zur Auswertung von Signalen einer Wirbelstromsonde und eine Vorrichtung zur Ausübung des Verfahrens. Bevorzugtes Anwendungsgebiet ist die Metall- und Minendetektion, bei der im Boden versteckte metallische Suchobjekte oder Suchobjekte mit metallischen Teilen aufgefunden werden sollen.

Die Metalldetektion durch Wirbelstromsonden ist bei der Minensuche seit langem bekannt. Eine Suchspulenanordnung einer Wirbelstromsonde, die eine an eine Wechselstromquelle angeschlossene Sendespule und mindestens eine Empfängerspule aufweist, wird in Bodennähe über den Boden hinweggeführt. Bei Annäherung an ein im Boden oder auf dem Boden befindliches Metallstück werden in diesem durch das elektromagnetische Wechselfeld der Sendespule Wirbelströme induziert, die im Wege der Gegeninduktion auf die Empfängerspule wirken und dort ein einer Wechselspannung entsprechendes Spulensignal erzeugen. Dieses wird einer Signalauswerteeinrichtung zugeführt und ausgewertet. Eine nachgeschaltete Anzeigeeinrichtung kann das Vorhandensein eines Metallstückes im Bereich der Suchspulenanordnung optisch und/oder akustisch anzeigen. Der Suchbereich kann daraufhin genauer auf das tatsächliche Vorhandensein einer Mine überprüft werden.

In der Praxis ergeben sich bei der Minensuche erhebliche Schwierigkeiten beispielsweise dadurch, daß die Suchobjekte in magnetisierbaren und/oder elektrisch leitfähigen Böden verborgen sind, deren Leitfähigkeit durch Salzwasser evtl. noch erhöht werden kann. Das Bodenmaterial kann aufgrund seiner Eigenschaften Störgrößen erzeugen, die bis zu 500 mal größer sein können als ein durch ein Metallstück verursachtes Nutzsignal.

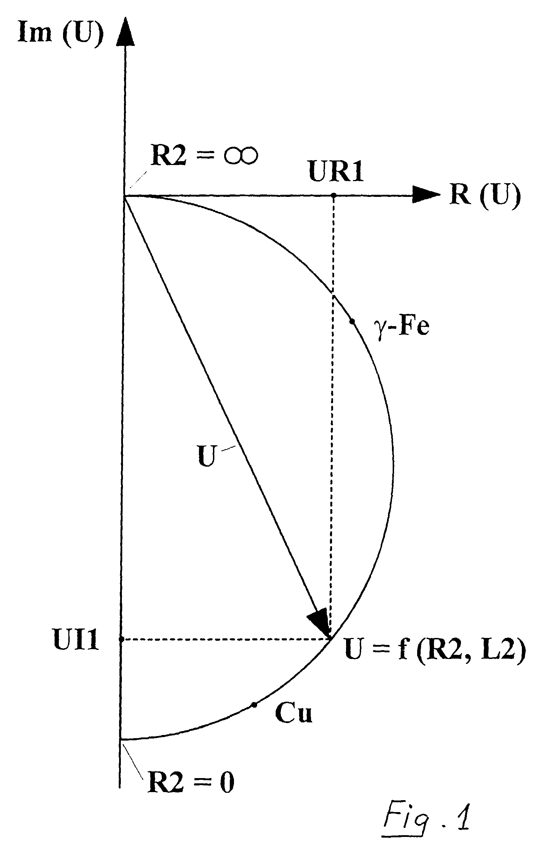

Es sind spezielle Betriebs- und Auswerteverfahren entwickelt worden, mit denen diese Störsignale unterdrückt werden können. Beispiele von Verfahren zur Unterdrückung von Störsignalen bei der Metalldetektion in störenden Umgebungen sind in der internationalen Patentanmeldung WO 87/04801 und der schwedischen Offenlegungsschrift 82 02 094-2 beschrieben. Das zugrundeliegende sogenannte "Zweifrequenzverfahren", bei dem die Sendespule mit zwei diskreten Frequenzen erregt wird, ist im Zusammenhang mit Fig. 1 näher beschrieben.

Während das Zweifrequenzverfahren gute Ergebnisse liefert, wenn die Umgebung praktisch ausschließlich magnetisierbar oder im wesentlichen nur elektrisch leitfähig, aber nicht magnetisierbar ist, ergeben sich in dem praktisch häufigen Fall, bei dem ein Boden sowohl magnetisierbar, als auch elektrisch leitfähig ist, Grenzen bei der Fähigkeit, Bodensignale zu unterdrücken.

Weiterhin kann bisher dem Spulensignal praktisch keine Information darüber entnommen werden, um welche Art von Metall es sich handelt, wie groß das Metallstück ist und wie tief es ggf. im Boden verborgen ist.

Eine weitere große Schwierigkeit bei der Minensuche mittels Wirbelstromsonden ist die sogenannte "Falschalarmrate" (false alarm rate). In einem Suchgebiet, in dem Minen vermutet werden, sind häufig auch harmlose metallische Gegenstände wie Splitter, Projektile, Patronenhülsen, Nägel, Kronenkorken und dergleichen auf dem Boden oder im Boden verteilt. Jedes dieser metallischen Teile kann in einer Wirbelstromsonde ein Suchsignal verursachen, ohne daß ohne weiteres entschieden werden kann, ob das Signal auf ein harmlosen Objekt oder eine Mine zurückgeht. Problematisch ist dies insbesondere bei der Suche nach Plastikminen, die neben einem mit Plastiksprengstoff gefüllten Kunststoffkörper lediglich wenige, kleine metallische Teile haben. Diese können einerseits nur mit empfindlichen Wirbelstromsonden detektiert werden, andererseits erzeugen sie jedoch aufgrund ihres geringen Volumens prinzipiell ähnliche Signale wie die genannten kleinen harmlosen Metallstücke. Um einer Gefährdung durch Plastikminen vorzubeugen, ist es bisher notwenig, jeweils bei Auftreten eines Metallsignales den Suchbereich genauer, ggf. manuell, auf das Vorhandensein einer Plastikmine zu untersuchen. Dies verlangsamt die Minensuche erheblich und setzt die Effektivität der Minensuche stark herab.

Aufgabe der Erfindung ist es, ein Verfahren zum Betrieb einer Wirbelstromsonde und zur Auswertung der Spulensignale zu schaffen, das es ermöglicht, die oben genannten Nachteile zu vermeiden. Insbesondere soll es auch ermöglicht werden, eine Identifikation von Metallstücken z.B. nach der Art des Metalls vorzunehmen. Vorzugsweise soll auch die Effektivität der Minensuche bei Vorhandensein von Plastikminen erhöht werden.

Zur Lösung dieser Aufgabe schlägt die Erfindung ein Verfahren zum Betrieb und zur Auswertung von Signalen einer Wirbelstromsonde gemäß Anspruch 1 vor. Dieses Verfahren kann vorzugsweise mit einer Vorrichtung gemäß Anspruch 17 ausgeführt werden.

Während im Zweifrequenzverfahren des Standes der Technik je nach Beschaffenheit der Umgebung ein Imaginär-Differenzsignal DIm oder ein Real-Differenzsignal DR wahlweise zur Weiterverarbeitung und Auswertung herangezogen wird, lehrt die Erfindung, daß die angestrebten Vorteile erreicht werden können, wenn durch Kombination von mindestens zwei Differenzsignalen der Art DIm oder DR ein von einer einfachen Linearkombination abweichendes Kombinationssignal gebildet wird und dieses zur Weiterverarbeitung und Auswertung verwendet wird. Je nachdem, nach welchem Verfahren die Bildung des Kombinationssignales erfolgt und je nachdem, wie diese Signalbildung in einer analogen oder digitalen Schaltung verkörpert wird, ergeben sich spezifische Vorteile. Vorteilhafte Weiterbildungen des erfindungsgemäßen Verfahrens sind in den Unteransprüchen angegeben. Es ist weiterhin eine Vorrichtung angegeben, mit der die Vorteile des Verfahrens umgesetzt werden können.

Merkmale der Erfindung und vorteilhafte Weiterbildungen gehen außer aus den Ansprüchen auch aus der Beschreibung und den zur Erläuterung beigefügten Zeichnungen hervor, wobei die einzelnen Merkmale jeweils für sich allein oder zu mehreren in Form von Unterkombinationen bei einer Ausführungsform der Erfindung oder auf anderen Gebieten verwirklicht sein und vorteilhafte Ausführungen darstellen können. Ein Ausführungsbeispiel der Erfindung wird anhand der Zeichnungen dargestellt. Es zeigen:

Fig. 1    ein schematisches Diagramm mit einem einer Wechselspannung U entsprechenden Zeiger in einer komplexen Spannungsebene mit einer realen Achse R (U) und einer imaginären Achse Im (U).

Fig. 2    einen Blockschaltplan einer bevorzugten Ausführungsform einer Vorrichtung nach der Erfindung.

Zur Erläuterung der Erfindung werden zunächst Grundlagen der Metalldetektion mit Hilfe des Wirbelstromprinzips und für das Verständnis der Erfindung wichtige Begriffe erläutert. Das Material Metall steht im folgenden, ohne Beschränkung auf Metall, für elektrisch leitfähiges Suchobjekte allgemein. Metalldetektion, insbesondere bei der Minensuche, ist jedoch das bevorzugte Anwendungsgebiet.

Betrachtet wird ein Metallstück, in dessen Nähe eine Suchspulenanordnung einer Wirbelstromsonde derart gebracht wird, daß ein von der Sendespule ausgehendes elektromagnetisches Wechselfeld in dem Metallstück einen Wirbelstrom induziert, der wiederum ein elektromagnetisches Wechselfeld bewirkt, das auf die Empfängerspule der Suchspulenanordnung durch Gegeninduktion zurückwirkt. Das Metallstück wird modellhaft durch eine Leiterschleife symbolisiert, die eine Selbstinduktivität $L2$ und einen Widerstand $R2$ hat und vom Wirbelstrom der Stromstärke $I2$ durchflossen wird. Die Sendespule wird von einem Primärstrom $I1$ durchflossen und hat die Induktivität $L1$. Die Empfängerspule hat die Induktivität $L3$. $L12$ und $L23$ sind die Gegeninduktionskoeffizienten, die die magnetische Kopplung zwischen Sendespule und Metallstück bzw. zwischen Metallstück und Empfängerspule beschreiben. Die Wechselspannung U ist danach die durch $I2 * L23$ induzierte Spannung. Die Kreisfrequenz des Primärstromes sei durch das Symbol f repräsentiert. Dabei steht f1 für eine diskrete erste Frequenz und f2 für eine von der ersten Frequenz verschiedene diskrete zweite Frequenz, die sich von der ersten Frequenz um einen vorzugsweise ganzzahligen Faktor FF ungleich 1 unterscheidet.

Weitere in dieser Anmeldung benutzte Abkürzungen sind z.B.: UR1 für den Realteil bzw. UI1 für den Imaginärteil der Wechselspannung U der Frequenz f1; FR1 ist ein Multiplikationsfaktor für den Realteil UR1, FI1 einen Multiplikationsfaktor für den Imaginärteil UI1, wobei die Faktoren gleich 1 oder von 1 verschieden sein können. Entsprechende Symbole UI2, UI3 etc. stehen für entsprechende Signale der zweiten, dritten Frequenz usw.. GI ist ein von der Suchsituation abhängiger Faktor mit $GI = (L12*L23)/L2$ ; $V21$ ist das Frequenzverhältnis $f2/f1$; $I11$ bzw. $I12$ sind die Amplituden der Primärstromkomponenten der ersten bzw. zweiten Frequenz.

In dem komplexen Spannungdiagramm in Fig. 1 wird die komplexe Zeichenebene durch die Realachse R (U) und die im rechten Winkel dazu stehende Imaginärachse Im (U) aufgespannt. Die Wechselspannung U, die in der Empfängerspule auftritt, wird durch den Zeiger U repräsentiert. Dieser ist um einen Winkel gegen die Realachse verdreht. Die Lage des Zeigers U ist eine Funktion der Materialparameter $R2$ und $L2$ des Metallstückes.

Der Winkel stellt die Lage der elektrischen Leitfähigkeit des Materials des Metallstückes auf der sogenannten Wirbelstromortskurve $U = f (R2, L2)$ dar. Schlechte Leiter, wie beispielsweise unmagnetisches austenitisches Eisen (Gamma-Fe), liegen im oberen Bereich des Halbkreises, gute Leiter, wie beispielsweise Kupfer, im unteren Bereich.

Figur 1 ist zu entnehmen, daß der Realteil UR1 und der Imaginärteil UI1 Projektionen der Spannung U auf die reale bzw. imaginäre Achse entsprechen. In der Praxis können die Projektionssignale UR1 und UI1 bei analog arbeitenden Verfahren beispielsweise durch phasengesteuerte Gleichrichtung der Spannung U bezüglich des Primärstromes I1 gebildet werden. Die Projektionssignale UR1 und UI1 stehen somit als Meßwerte zur Verfügung; analoges gilt für UR2 und UI2 etc..

Bei einem Suchobjekt in elektrisch und magnetisch inaktiver Umgebung könnte durch Verhältnisbildung dieser Meßwerte die elektrische Leitfähigkeit des Suchobjektes ermittelt werden. In der Praxis, beispielsweise bei der Minensuche und Altlastendetektion, ergeben sich erhebliche Schwierigkeiten durch magnetisierbare und/oder elektrisch leitfähige Böden, in denen die zu detektierenden Suchobjekte verborgen sind. Auch Salzwasser als leitfähiges Medium kommt als Störgröße häufig hinzu. Zur Unterdrückung der Störgröße kann die Phase für die gesteuerte Gleichrichtung senkrecht zur Störgröße eingestellt werden, wodurch die Spannung U auf die senkrecht zur Störgröße stehende Achse projiziert wird. Spannungen, die durch magnetisierbaren Boden hervorgerufen werden, liegen im wesentlichen in Richtung der imaginären Achse; um diesen Einfluß zu unterdrücken, wird herkömmlich auf die reale Achse projiziert. Gegenüber Metallen ist die Leitfähigkeit von Boden und Salzwasser zwar sehr klein, jedoch entstehen wegen des großen Volumens trotzdem erhebliche Spannungen. Diese liegen im Idealfall im wesentlichen in Richtung der realen Achse. Zu ihrer Unterdrückung kann daher auf die imaginäre Achse projiziert und nur Meßsignale in dieser Richtung ausgewertet werden.

Diese Art der Störunterdrückung kann unzureichend sein, wenn magnetisierbarer und/oder leitfähiger Boden und/oder Salzwasser gleichzeitig vorhanden sind, was normalerweise der Fall ist. Bei mit einer einzelnen Frequenz arbeitenden Metalldetektoren kann versucht werden, beispielsweise mit Hilfe eines Phasenschiebers senkrecht zum Spannungsvektor des Hauptstörers auszuwerten. Da Bodeneinflüsse jedoch in der Regel stark schwanken, erfordert dies eine laufende Nachregelung der Phase, was in der Regel manuell geschieht und vom Sondengänger viel Erfahrung und Geschicklichkeit erfordert. Die Suchgeschwindigkeit wird dadurch in der Regel erheblich verlangsamt.

Das herkömmliche Zweifrequenzverfahren vermeidet diese Probleme teilweise. Beim Zweifrequenzverfahren wird die Sendespule mit einem Primär-Wechselstrom I1 beaufschlagt, der eine Komponente einer diskreten ersten Frequenz f1 und eine Komponente einer diskreten zweiten Frequenz f2 enthält. In der Empfängerspule entsteht dann eine Spannung mit zwei Frequenzanteilen, denen jeweils entsprechend Fig. 1 ein Realteil und ein Imaginärteil zugeordnet ist. Beispielsweise ergibt sich für den Imaginärteil der Spannung der ersten Frequenz folgender Wert:

$$UI1 = f1 * I11 * GI * 1/(R2/f1 * L2)^2 + 1 \qquad\qquad (Gl. 1)$$

Diese Gleichung 1 enthält als Unbekannte den Faktor GI und die Werte R2 und L2. Es gilt nachfolgend folgende Abkürzung: $(R2/(f1 * L2))^2 = S$. Bei magnetisierbarem Boden ergibt sich für jede der beiden Frequenzen ein zusätzlicher Spannungsanteil UF1 bzw. UF2.

Die den Frequenzen f1 und f2 entsprechenden Spannungen können erhalten werden, wenn das Spulensignal der Empfängerspule in Frequenzanteile entsprechend dieser Frequenzen aufgespalten wird. Dazu kann eine Signalauswerteeinrichtung beispielsweise Bandpässe der Mittenfrequenzen f1 und f2 aufweisen. Die Aufspaltung kann ggf. nach Verstärkung des Spulensignals der Empfängerspule erfolgen. Durch Projektion der beiden Frequenzanteile können die entsprechenden Real- und Imaginärsignale erzeugt werden, so daß insgesamt vier Signale bzw. vier Kanäle vorliegen mit den Spannungen UR1, UI1, UR2 und UI2. Diese können mit entsprechenden Faktoren FR1, FI1, FR2 bzw. FI2 multipliziert werden, was bei einer analogen Auswertung einer Verstärkung bzw. Abschwächung der entsprechenden Spannungen entspricht. Einer oder mehrere Faktoren können auch gleich 1 sein, so daß ein Multiplikationsschritt die entsprechenden Signale nicht verändert. In diesen Fällen sind Projektionssignale und gewichtete Projektionssignale gleich. Der Multiplikationsschritt des Verfahrens fällt dann im Ergebnis weg.

Die Spannungen bzw. Signale enthalten in der Regel sowohl Signalanteile des Suchobjektes als auch Signale der ggf. magnetisierbaren und/oder elektrisch leitfähigen Umgebung. Zur Unterdrückung von Störsignalen, die auf eine magnetisierbare Umgebung zurückgehen, werden die den Frequenzen entsprechenden Spannungen der Imaginärkanäle auf ein Differenzbildungsglied bzw. einen Subtraierer gegeben. Wird durch richtige Wahl der Gewichtungs-Faktoren FI1 und FI2 bei bekannten Werten von f1, f2, I11, I12 folgende Bedingung eingestellt:

$$FI1 * f1 * I11 = FI2 * f2 * I12 = G, \qquad\qquad (Gl. 2)$$

dann kann durch diese Differenzbildung der Einfluß des magnetisierbaren Bodens auf Null reduziert werden. Nach diesem Verfahren wird also ein Signal gebildet, das der Differenz von Wirbelstromeffekten in einem elektrisch leitenden Suchobjekt bei verschiedenen Frequenzen entspricht. Das Imaginär-Differenzsignal DIm ist ein Differenzsignal aus gewichteten Projektionssignalen, die durch Projektion auf die imaginäre Achse gebildet werden, und kann wie folgt dargestellt werden:

$$DIm = (FI2 * UI2) - (FI1 * UI1) \qquad\qquad (Gl. 3)$$
$$= GI * G * [1/(S + 1) - (V21)^2/(S + (V21)^2)]$$

Der Faktor V21 steht für das Frequenzverhältnis f2/f1. Das Nutz/Störsignalverhältnis steigt stark an, da durch diese Differenzbildung die Hauptstörer gleichzeitig unterdrückt werden, denn das Signal DIm wird in Richtung der imaginären Achse ausgewertet und die in Richtung der realen Achse liegenden Leitfähigkeitsanteile werden unterdrückt.

Durch einen entsprechenden Verfahrensschritt kann ein Real-Differenzsignal DR gemäß folgender Gleichung gebildet werden:

$$DR = (UR2 * FR2) - (UR1 * FR1) \qquad\qquad (Gl. 4)$$

Die Verwendung der Differenzsignale DIm oder DR kann ausreichen, wenn es nur gewünscht ist, störende Bodensignale zu unterdrücken. Bisher bekannte Verfahren machen sich diese Effekte zunutze.

Die Signale sind jedoch z.B. bezüglich der Leitfähigkeit des Materials des Suchobjektes mehrdeutig; dies bedeutet, daß unterschiedliche Materialien gleiche Signale DIm bzw. DR ergeben können.

Eine deutliche Verbesserung bezüglich Störunterdrückung und/oder Identifizierbarkeit eines im Boden oder in Bodennähe befindlichen Suchobjektes ergibt sich dann, wenn durch Kombination von mindestens zwei Differenzsignalen der Art DIm oder DR ein Kombinationssignal gebildet und dieses zur Auswertung verwendet wird. Das Kombinationssignal unterscheidet sich mit Vorteil von einer einfachen Linearkombination der Differenzsignale.

Es können beispielsweise sowohl ein Imaginär-Differenzsignal DIm als auch ein Real-Differenzsignal DR gebildet und diese derart kombiniert werden, daß das Kombinationssignal ein Real-Imaginär-Kombinationssignal KRIS ist, das durch Summierung der Beträge der Differenzsignale gemäß

$$KRIS = |DIm| + |DR| \tag{Gl. 5}$$

gebildet wird. Auf diese Weise kann ein noch besseres Nutz/Störsignalverhältnis als bei der bisher bekannten getrennten Auswertung der Signale DIm bzw. DR erreicht werden. Die Betragsbildung ist vorteilhaft, da beispielsweise bei steigender Frequenz die Spannung UR sowohl zunehmen kann, wie es beispielsweise bei Gamma-Eisen der Fall ist, als auch abnehmen kann, was zum Beispiel bei Kupfer der Fall ist. Somit sind beide Vorzeichen der Differenz DR möglich. Durch Betragsbildung mindestens bezüglich DR wird eine mögliche Reduzierung des Summensignales vermieden.

Eine weitere signifikante Steigerung des durch das Verfahren ermöglichten Informationsgehaltes läßt sich dadurch erreichen, daß ein Imaginär-Differenzsignal DIm und ein Real-Differenzsignal DR gebildet wird und daß das Kombinationssignal ein Real-Imaginär-Kombinationssignal KRIQ ist, das aus dem Quotient der Differenzsignale gemäß der Gleichung

$$KRIQ = DIm/DR \tag{Gl. 6}$$

oder dem Kehrwert davon gebildet wird. Dies ist unter anderem deshalb von entscheidendem Vorteil, weil die einzelnen Differenzsignale DIm bzw. DR eine Ermittlung der Leitfähigkeit nicht ermöglichen. Denn die entsprechenden Einzelsignale enthalten zu viele Unbekannte, beispielsweise den von den Gegeninduktivitäten L12 und L23 sowie von der Selbstinduktivität L2 abhängigen Faktoren GI. Durch eine Division der Differenzsignale und Bildung eines Kombinationssignales vom Typ KRIS ist es möglich, ein der Leitfähigkeit des Materials des Suchobjektes proportionales Signal zu bilden, das bezüglich Frequenz f1 folgender Gleichung gehorcht:

$$L2/R2 = FI1/(f1 * FR1) * (DR/DIm) \tag{Gl. 7}$$

Alle Faktoren der rechten Seiten von Gleichung 7 sind bekannt. Auf Grundlage von Gleichung 7 kann mittels eines auf dem Wirbelstromprinzip beruhenden Suchsystemes durch Verwirklichung der dort gezeigten oder einer entsprechenden Funktion in einer analogen Schaltung oder digital, beispielsweise mit Hilfe eines entsprechend aufgebauten Mikroprozessors, ein für die Leitfähigkeit des aufgefundenen Materiales eindeutiges Signal erzeugt werden. Dies erlaubt eine Klassifizierung von Metallen nach ihrer Leitfähigkeit. Mit Hilfe einer entsprechenden, in einen Suchgerät gespeicherten Zuordnungstabelle kann auf einer Ausgabeeinheit, beispielsweise einer optischen Anzeige (LCD-Display und/oder Leuchtdiodenanzeige oder dergleichen) direkt angezeigt werden, welche Art von Metall aufgefunden wurde.

Die beschriebenen, mit zwei Erregerfrequenzen realisierbaren Verfahren sind vorteilhaft, es kann jedoch beispielsweise bei der Minensuche Umgebungsbedingungen geben, bei denen die durch leitfähigen und/oder magnetisierbaren Boden verursachten Störsignale so groß sind, daß entweder nur Imaginär-Differenzsignale vom Typ DIm oder nur Real-Differenzsignale vom Typ DR zur Metalldetektion herangezogen werden können. Eine Bestimmung der Leitfähigkeit durch Division gemäß Gleichung 7 ist dann nur unzureichend oder nicht mehr möglich.

Die Schwierigkeiten können durch Hinzufügen von mindestens einer weiteren Frequenzkomponente des Erregerstromes bzw. Primärstromes entsprechend mindestens einer weiteren diskreten Frequenz f3 behoben werden, die sich von der ersten Frequenz f1 um einen Faktor FF13 und von der zweiten Frequenz f2 um einen Faktor FF23 unterscheidet, wobei FF13 und FF23 vorzugsweise ganzzahlig und ungleich 1 sind. Analog dem bereits beschriebenen Verfahren kann durch Aufspaltung bzw. Zerlegung in Frequenzanteile und Bildung von Projektionssignalen auch bezüglich der dritten Frequenz beispielsweise ein drittes Realsignal UI3 oder ein drittes Imaginärsignal UR3 gebildet werden. Dieses sind die Projektionssignale, die der dritten Frequenz zugeordnet sind. Ein Projektionssignal kann analog dem vorher Gesagten mit einem Multiplikations- bzw. Verstärkungsfaktor FI3 bzw. FR3 multipliziert werden, so daß ein gewichtetes Projektionssignal P3 entsteht, das entweder der Projektion auf die reale Achse entsprechend P3 = (FR3 * UR3) , oder der Projektion auf die imaginäre Achse entsprechend P3 = (FI3 * UI3) entspricht. Es werden mit Vorteil zur Weiterverarbeitung entweder gewichtete Projektionssignale P1, P2, P3 genutzt, die alle einem Realsignal entsprechen oder die alle einem Imaginärsignal entsprechen. Aus den gewichteten Projektionssignalen P1, P2, P3 eines gemeinsamen Typs (Realsignal oder Imaginärsignal) können dann z.B. ein erstes Projektions-Differenzsignal DP21 gemäß der Gleichung

$$DP21 = P2 - P1 \tag{Gl. 8}$$

und mindestens ein zweites Projektions-Differenzsignal, beispielsweise DP31 gemäß

$$DP31 = P3 - P1 \qquad \qquad (Gl. 9)$$

gebildet werden. Mit Hilfe der mindestens einen zusätzlichen dritten Frequenz ist es demgemäß möglich, bezüglich eines Anteils (Realanteil oder Imaginäranteil) jeweils zwei oder drei (bzw. noch weitere) Projektions-Differenzsignale zu bilden.

Ohne Beschränkung der Allgemeingültigkeit sei im folgenden das Verfahren anhand eines Dreifrequenz-Verfahrens beschrieben. Es ist dem Fachmann verständlich, daß auch eine vierte, fünfte und weitere Frequenzen verwendet werden können, wodurch eine entsprechend höhere Anzahl von Projektions-Differenzsignalen erzeugt werden kann.

Nach dem Dreifrequenzverfahren sind beispielsweise zwei verschiedene Signale vom Typ DIm bzw. zwei verschiedene Signale von Typ DR erzeugbar. Diese können zwei DIm - bzw. DR - Kanälen entsprechen. Beide Kanäle eines Typs können beispielsweise in der oben beschriebenen Weise jeweils einzeln zur Metalldetektion und/oder Metallidentifizierung verwendet werden und man kann beispielsweise den Kanal mit dem besseren Nutz-Störsignalverhältnis zur weiteren Auswertung heranziehen.

Besonders vorteilhaft ist es, wenn ein Projektions-Kombinationssignal KP gebildet wird, das durch Kombination von mindestens zwei der oben genannten Projektions-Differenzsignalen der Art DP21, DP31 usw. gebildet wird. Diese Kombination kann in der Signalauswerteeinrichtung wiederum analog und/oder digital ausgeführt werden. Wird das Projektions-Kombinationssignal KP aus dem Quotient zweier Projektions-Differenzsignale beispielsweise gemäß

$$KP = DP31 / DP21 \qquad \qquad (Gl. 10)$$

gebildet, so ist aus dem Kombinationssignal wieder ein eindeutiger Schluß auf die Leitfähigkeit des entsprechenden Materials möglich, denn es können die unbekannten Gegeninduktivitäten L12 und L23 und die Selbstinduktivität L2 eliminiert werden.

Im Unterschied zu der Leitfähigkeitsbestimmung nach Gleichung 7 ist beim Mehrfrequenzverfahren mit mehr als zwei Frequenzen mit Vorteil eine Wahl zwischen einer Auswertung in der imaginären Richtung und einer Auswertung in der realen Richtung möglich, so daß bei der Auswertung die Richtung gewählt werden kann, die eine bessere Störunterdrückung ermöglicht. Mit der Abkürzung: V31 = F3/F1 und KP = DP31/DP21 ergibt sich das Verhältnis (L2/R2), das der elektrischen Leitfähigkeit des Suchobjektes proportional ist, aus folgender Gleichung:

$$L2/R2 = 1/f1 * [(KP * (1-V31^2) - (1-V21^2)) / (V31^2 * (1 - V21^2) - KP * V21^2 * (1-V31^2))]^{1/2} \qquad (Gl.11)$$

Nach dieser Gleichung wird in Richtung der imaginären Achse ausgewertet, was mit Vorteil dann anzuwenden ist, wenn die Störsignale in Richtung der imaginären Achse kleiner sind als in Richtung der realen Achse.

Eine analoge Auswertung zur Bestimmung der Leitfähigkeit ergibt sich bei Auswertung in Richtung der realen Achse, wobei letzteres Auswerteverfahren dann vorteilhaft anzuwenden ist, wenn die Störsignale in Richtung der realen Achse kleiner sind als in Richtung der imaginären.

Die so ermittelten Leitfähigkeiten können z.B. mittels eines Vergleichsgliedes mit Leitfähigkeitswerten gemäß Gleichung 7 verglichen werden, um eine Aussage über die Zuverlässigkeit der ermittelten Werte zu erreichen.

Ein Projektions-Kombinationssignal KP kann auch durch eine Summierung der Beträge mindestens zweier Projektions-Differenzsignale beispielsweise gemäß

$$KP = |DP31| + |DP21| + ... \qquad \qquad (Gl. 12)$$

in einem Summationsglied einer analogen Schaltung oder eines Mikroprozessors oder dergleichen gebildet werden. Dabei können die Signale DP31 und DP21 usw. jeweils Differenzen von Projektionssignalen auf der imaginäre Achse oder auf der reale Achse entsprechen. Bei den Differenzen bezogen auf die reale Achse sind Betragsbildungen, wie oben ausgeführt, von Vorteil. Es ist auch möglich, Signale der imaginären Achse und Signale der realen Achse zu summieren.

Bisher wurde beschrieben, daß insbesondere das Dreifrequenz- bzw. Mehrfrequenzverfahren es im Unterschied zum Zweifrequenzverfahren ermöglicht, die Leitfähigkeit eines georteten Metallteiles zu bestimmen. Dies kann bei optimaler Unterdrückung von Bodensignalen erreicht werden.

Ist das Material des Suchobjektes nicht nur elektrisch leitfähig, sondern auch ferromagnetisch, so ergibt sich eine ähnliche halbkreisförmige Wirbelstromortskurve V = f (R2, L2) wie in Fig. 1. Diese fällt auf der imaginären Achse bei R = 0 mit der in Fig. 1 gezeigten Wirbelstromortskurve U = f(R2, L2) zusammen, hat aber einen um einen Betrag Q größeren Durchmesser, so daß der andere Schnittpunkt mit der imaginären Achse bei +Q liegt. Q ist dabei nur von der Permeabilität des Materials abhängig. Bei ferromagnetischen metallischen Materialien repräsentiert der Winkel zwischen realer Achse und Zeiger das Produkt aus Permeabilität und elektrischer Leitfähigkeit.

Dieser Umstand kann mit Vorteil berücksichtigt werden, wenn mindestens eine, vorzugsweise zwei Komponenten des Primärstromes I1 eine Niedrigfrequenz f0 haben, die kleiner als 1 KHz ist, vorzugsweise zwischen 50 Hz und 500 Hz beträgt und insbesondere bei ca. 100 Hz liegt. Die Primärspule kann auch zeitversetzt zum Primärstrom I1 mit Wechselstrom der Frequenz f0 beaufschlagt werden. Die Beaufschlagung mit Frequenz f0 kann vorzugsweise über ein begrenztes Zeitintervall erfolgen. Das Spulensignal beinhaltet dann einen entsprechenden Anteil, der einem durch die Niedrigfrequenz bewirkten Niedrigfrequenzsignal entspricht. Bei niedrigen Frequenzen können die durch Wirbelströme im Suchobjekt bewirkten Signalanteile gegenüber den durch ferromagnetische Effekte verursachten Signalanteilen vernachlässigt werden. Bei Frequenzen von etwa 100 Hz sind einerseits die durch Wirbelstrome generierten Signalanteile noch klein genug, andererseits reichen solche Frequenzen schon aus, ferromagnetisches Material so schnell umzumagnetisieren, damit die dadurch in L2 induzierte Spannung genügend groß ist. Durch Verwendung von Niedrigfrequenzen wird der Faktor Q bestimmbar bzw. es kann ein diesem Faktor entsprechendes Q-Signal gebildet werden.

Wenn keine magnetischen Störer vorhanden sind, kann eine einzelne Niedrigfrequenz f0 ausreichen. Der Betrag der durch diese induzierten imaginären Spannung, $UI0$, ist im wesentlichen gleich Q, wenn f0 so niedrig ist, daß Wirbelstromeffekte auf den Imaginärteil $UI0$ vernachlässigbar sind. Die Transformation der Wirbelstromortskurven $V = f(R2, L2)$ und $U = f(R2, L2)$ mit Hilfe des auch als Transformations-Signal beschreibbaren Q-Signals kann nach allgemein bekannten Regeln der Transformation von Kreisen ineinander erfolgen. Dies kann analog beispielsweise durch Subtraktion von Spannungen erfolgen oder digital, beispielsweise in einem Mikroprozessor.

Wenn magnetische Störer vorhanden sind, werden vorzugsweise zwei unterschiedliche Niedrigfrequenzen verwendet und es kann in Analogie zu Gleichung 3 eine Imaginär-Differenzsignal $DIm0$ gebildet werden. Störeinflüsse durch magnetisierbare Störer sind damit unterdrückt. Auch die Realteile der durch die zwei Niedrigfrequenzen induzierten Spannungen können zur Unterdrückung von leitfähigen Boden und Salzwasser und zur Bildung des Q-Signals herangezogen werden.

Mittels des Q-Signals bzw. Transformationssignals kann eine Transformation des Spulensignals mit einem durch die Magnetisierbarkeit des Suchobjektes bewirkten, "ferromagnetischen" Signalanteil in ein transformiertes Spulensignal ohne diesen Anteil durchgeführt werden. Die weitere Auswertung des transformierten Spulensignals kann dann wie vorstehend und nachfolgend beschrieben ausgeführt werden. Die ermittelte Permeabilität kann als Meßwert analog und/oder digital angezeigt werden. Über entsprechende Zuordnungstabellen kann die Metallart direkt angezeigt werden. Diese Information kann mit der Leitfähigkeits-Information verglichen werden, wodurch eventuelle Mehrdeutigkeiten vermieden werden können.

Mit Hilfe von hier vorgeschlagenen Verfahrensschritten ist außerdem eine bisher nicht realisierte Möglichkeit eröffnet, eine Wirbelstromsonde als speziell auf Bodensignale ausgerichtete Sonde zu verwenden. Dies kann beispielsweise bei der Minensuche von großem Vorteil sein, wenn nach Plastikminen gesucht wird, die neben einem Körper oder Gehäuse aus Kunststoff in der Regel nur sehr kleine metallische Teile, z.B. Zündstifte oder dergleichen, aufweisen. Wird eine Wirbelstromsonde als Bodensonde zur Erzeugung eines Bodensignals verwendet, so kann die Erkenntnis ausgenutzt werden, daß dort, wo ein Kunststoffkörper im Boden liegt, kein Bodenmaterial sein kann. Wird ein metallisches Teil entdeckt und wird durch eine Bodensonde ermittelt, daß ein das metallische Teil umgebender Volumenbereich kein Bodenmaterial und kein elektrisch leitfähiges Material aufweist, dann kann angenommen werden, daß er mit elektrisch nicht leitfähigem Material, insbesondere Kunststoff, ausgefüllt ist. Ein bodenmaterialfreier "Hohlraum", also das Fehlen von Bodenmaterial, insbesondere in einer definierten räumlichen Beziehung zum Ort eines metallischen Teiles, kann somit als Hinweis für das Vorhandensein einer Plastikmine ausgenutzt werden.

Am Beispiel einer Auswertung in Richtung der imaginären Achse, die vorzugsweise beim magnetisierbarem Boden eingesetzt wird, kann das Verfahren zur Erzeugung eines Bodensignales mittels einer Wirbelstromsonde wie folgt dargestellt und ausgeführt werden. Um das Bodensignal ohne ein Signal eines eventuell vorhandenen Metallteiles zu bilden, ist es zweckmäßig, wenn zunächst das Signal des Metallteiles aus dem Gesamtsignal in imaginärer Richtung entfernt wird. Dies ist in der Regel vorteilhaft, da das Kunststoffgehäuse der Plastikmine das Metallteil umschließt oder an dieses angrenzt und das Bodensignal und das Metallsignal sowohl zur gleichen Zeit als auch am im wesentlichen gleichen Ort auftreten. Nach dem hier nur beispielsweise dargestellten Verfahren zur Eliminierung eines einem metallischen Objekt entsprechenden Signalanteils des Sondensignals kann die Leitfähigkeit des Objekts beispielsweise nach Gleichung 7 ermittelt werden, wodurch ein Signal erzeugbar ist, das dem der Leitfähigkeit proportionalen Faktor $(L2/R2)$ entspricht. Ausgehend von einem dem Faktor $(L2/R2)$ entsprechenden Signal kann der noch unbekannte Faktor GI, der sich aus den Gegeninduktivitäten L12 und L23 sowie der Selbstinduktivität L2 des Metallstücks ergibt, bestimmt und ein entsprechendes Signal gebildet werden. Mathematisch ergibt sich die Bildung des dem Faktor GI entsprechenden Signales beispielsweise durch Einsetzen von Gleichung 7 in Gleichung 3. Es gilt:

$$GI = DIm / (G *(1 / (S + 1) - V21^2) / (S + V21^2)) \qquad \text{(Gl. 13)}.$$

Dieser mit keinem der bisher bekannten Verfahren ermittelbare Faktor, der in der Signalauswerteeinrichtung einem entsprechenden analogen oder digitalen Signal entspricht, ermöglicht es, aus einem in Richtung der imaginären Achse betrachteten Gesamtsignal U den Imaginärteil der durch das Metallteil erzeugte Spannung für eine Frequenz zu bestimmen. Dieser Imaginärteil entspricht beispielsweise für die erste Frequenz f1 der Spannung UI1, wie sie in Gleichung 1 dargestellt ist. Es ist zu erkennen, das dank des beschriebenen Verfahrens sämtliche in Gleichung 1 auftretenden Faktoren bekannt sind. Die Signalbildung kann folgendermaßen mathematisch beschrieben werden:

$$FI1 * UI1 = GI * G * (1/(S+1)) \qquad \text{(Gl. 14).}$$

Das Signal $FI1 * UI1$ entspricht für die Frequenz f1 dem durch das Metallteil bei der Frequenz f1 erzeugten, mit dem Faktor FI1 gewichteten Imaginärteil des Spulensignals. Durch Multiplikation mit einem frequenzspezifischen Faktor C, der beispielsweise einen Wert C1 vorzugsweise zwischen 0,9 und 1,1 haben kann, kann das Signal zum Zwecke des Feinabgleichs gewichtet werden. Das gewichtete projizierte Metallsignal kann anschließend von dem in dem Imaginärkanal der Frequenz f1 vorliegenden Gesamtsignal subtrahiert werden. Durch Subtraktion entsteht somit ein Bodensignal UBI1, das für Frequenz f1 einem in Richtung der imaginären Achse projizierten Bodensignal UB entspricht.

Entsprechende Signale können für alle verwendeten Frequenzen jeweils für die imaginäre Achse und für die reale Achse gebildet und zur Auswertung verwendet werden.

Mit Hilfe des beschriebenen Bodensignals kann ein verdächtiger Suchbereich, in dem eine Plastikmine vermutet wird, beispielsweise durch Hin- und Herbewegung der Wirbelstromsonde über die verdächtige Stelle und Beobachtung des Signalverlaufs von UBI1 beispielsweise in Form einer "Überlaufkurve" verfolgt werden. Dies kann optisch, beispielsweise mit Hilfe eines Zeigeinstrumentes, eines Displays oder von Leuchtdioden oder auch akustisch erfolgen, wobei vorzugsweise die Minima bzw. Maxima des Signalverlaufes zu beachten und ggf. durch entsprechende Bausteine der Signalauswerteeinrichtung hervorgehoben werden können. Wenn man aus der Ermittlung der Leitfähigkeit bereits weiß, daß die verdächtige Stelle Metall enthält und nicht nur eine Bodeninhomogenität darstellt, kann eine Korrelation des Bodensignals UB mit dem Metallsignal durchgeführt werden, beispielsweise durch Vergleich der räumlichen Lagen der jeweiligen Extrema der Überlaufkurven. Die Überlaufkurven können mit Vorteil, ggf. nach Digitalisierung, in ihrem zeitlichen und/oder örtlichen Verlauf aufgezeichnet werden. Durch eine Anzeigeeinrichtung, beispielsweise einen Bildschirm, können die Überlaufkurven des Metallteils und des Bodens zeitversetzt oder, was bevorzugt ist, gleichzeitig dargestellt werden. Wenn die Extremwerte beider Kurven durch geeignete Verstärkung bzw. Abschwächung (entsprechend einer Multiplikation mit Gewichtungsfaktoren) auf gleiche Werte eingestellt werden, ist es möglich, z.B. durch Vergleich der Halbwertsbreiten zu ermitteln, ob tatsächlich ein Metallteil von Kunststoff (bzw. einem bodenfreien Volumenbereich) umgeben ist oder ob es sich bei dem vermuteten Bodensignal nur um einen ungenügend kompensierten Anteil eines Metallsignals handelt. Da das Volumen eines Kunststoffkörpers, beispielsweise einer Plastikmine, in der Regel größer ist als das des Metallteils, wird auch die Halbwertsbreite des Bodensignales größer sein als die des Metallsignals. Durch Variation des Faktors C1 kann die Überkopplung des Metallsignals auf das Bodensignal minimiert werden; denn wenn kein bodenfreier Hohlraum vorhanden ist, verschwindet die Überlaufkurve des Bodensignales fast vollständig bei einem bestimmten Wert von C1. Ist dagegen ein Hohlraum vorhanden, was auf eine Plastikmine hindeutet, so bleibt eine charakteristische "Restkurve". Sind die zusammengehörenden Extrema der beiden Kurven seitlich gegeneinander versetzt, so zeigt dies an, daß das Metallteil, beispielsweise ein Zündstift, und der Kunststoffkörper der Plastikmine seitlich miteinander verbunden sind.

Ein Bodensignal kann, wie ausgeführt, auch bezüglich einer weiteren Frequenz, beispielsweise Frequenz f2 entsprechend UBI2 gebildet werden. Durch Vergleich der für zwei bzw. mehrere Frequenzen ermittelten Überlaufkurven, insbesondere durch Vergleich der o.g. "Restkurven" kann das frequenzspezifische Signal mit dem besseren Nutz/Störsignalverhältnis ausgewählt werden.

Es kann auch die Summe der Bodensignale von mindestens zwei Frequenzen bezüglich einer Projektionsachse, beispielsweise der imaginären Achse, gebildet und zur Auswertung herangezogen werden. Abhängig von Leitfähigkeit, Permeabilität und geometrischer Form des Metallteiles ist es möglich, die Überkopplung der Metallsignale bei den verschiedenen Frequenzen durch Variation der Faktoren, beispielsweise Faktor C1 und Faktor C2, zu minimieren.

Das bisher beispielhaft dargestellte Verfahren zur Erzeugung und Auswertung eines Bodensignales in Bezug auf die imaginäre Achse ist besonders vorteilhaft, wenn der Boden magnetisierbar ist. Ist der Boden besonders leitfähig, so können entsprechende Bodensignale UBR1, UBR2 usw. durch Projektion auf die Realachse in analoger Weise gebildet werden.

Da Wirbelströme in leitfähigen Böden quadratisch mit der Frequenz f ansteigen, werden bei leitfähigen Böden zur Hervorhebung des Bodensignals möglichst hohe Frequenzen bevorzugt. Mindestens eine Frequenz kann beispielsweise mehr als 60 KHz, insbesondere mehr als 100 KHz, vorzugsweise etwa 100 KHz betragen, sollte aber vorzugsweise weniger als 200 KHz betragen.

Bei Verwendung von drei oder mehr Frequenzen ist eine zweckmäßig durch Frequenzteilung einer Grundfrequenz erzeugbare Frequenzstaffelung um ganzzahlige Vielfache von 2, insbesondere um den Faktor 8 möglich. Es können z.B. f1 = 2 KHz, f2 = 16 KHz und f3 = 128 Khz betragen.

Zur Verbesserung des Nutz/Störsignalverhältnisses können zwei oder mehrere Bodensignale addiert werden, wobei vorzugsweise bei Bodensignalen UBR1, UBR2 usw., die durch Auswertung in Richtung der realen Achse entstehen, die jeweiligen Beträge zur Summation zu verwenden sind.

Die beschriebene Bodensignalbildung und -auswertung kann mit zwei Frequenzen, jedoch vorteilhaft auch mit drei oder mehr Frequenzen durchgeführt werden. Wenn beispielsweise zur Ermittlung der Leitfähigkeit nur Signale bzw. Daten für eine Achsrichtung ausgewertet werden, können Störsignale in der anderen Achse besonders gut unterdrückt werden. Durch die Kompensation zufällig in Einzelkanälen auftretender Fehler kann das Nutz/Störsignalverhältnis bei Bildung der Summen gesteigert werden.

Besonders große Vorteile können sich durch eine Bildung und Auswertung von Signalen ergeben, die die Frequenzabhängigkeit der Bodensignale repräsentieren: Leitfähige Böden und Salzwasser zeigen eine quadratische Abhängigkeit, magnetisierbare Böden dagegen eine lineare Abhängigkeit von der Frequenz. Prinzipiell anders ist die Frequenzabhängigkeit von Metallsignalen. Durch Auswertung der Frequenzabhängigkeit eines Signals können insgesamt parasitäre übergekoppelte Signale identifiziert und von Nutzsignalen getrennt werden. Insbesondere kann das Übersprechen von Bodensignalen und Metallsignalen berücksichtigt und für die Auswertung eliminiert werden.

Die Erzeugung bzw. Bildung der beschriebenen Signale, die zur besseren Illustration als Faktoren in mathematischen Gleichungen symbolisiert wurden, kann sowohl mit analogen elektronischen Bauteilen als auch mindestens teilweise digital, beispielsweise mit Hilfe eine Mikroprozessors erfolgen.

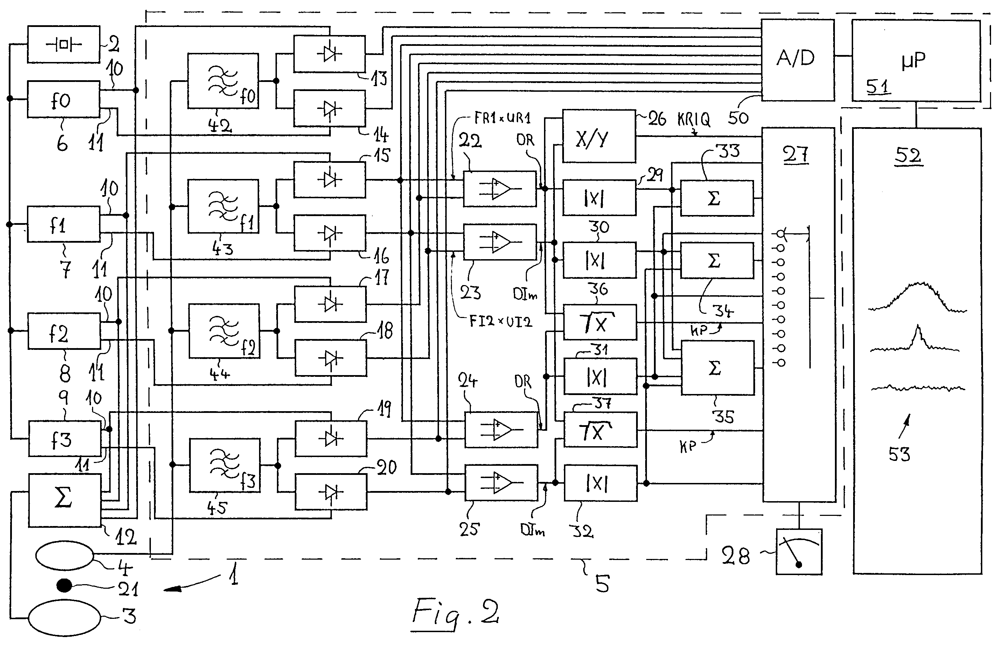

Der Blockschaltplan in Fig. 2 illustriert, wie bei einer als Minensuchgerät ausgebildeten Vorrichtung zur Bodenerkundung und Fremdkörperdetektion die Wirbelstromsonde und die Signalauswerteeinrichtung und deren Bauteile vorteilhaft miteinander verknüpft sein können. Die durchgezogenen Linien stellen jeweils elektrisch leitende Verbindungen dar, überkreuzende Linien sind nur an den mit schwarzen Punkten markierten Kreuzungen elektrisch miteinander verbunden.

Die Suchspulenanordnung 1 der Wirbelstromsonde weist eine an eine Wechselstromquelle 2 angeschlossene Sendespule bzw. Primärspule 3 und eine Empfängerspule 4 auf, die an eine gestrichelt umrahmte Signalauswerteeinrichtung 5 angeschlossen ist. Der Oszillator 2 erzeugt einen Primärstrom einer vorgegebenen Frequenz. Durch Frequenzteiler 6, 7, 8, 9 wird diese derart geteilt, daß beispielsweise Frequenzteiler 7 die Frequenz f1 mit 2 KHz, Frequenzteiler 8 die Frequenz f2 mit 16 KHz und Frequenzteiler 9 die Frequenz f3 mit 128 KHz erzeugt. Frequenzteiler 6 erzeugt die Niedrigfrequenz f0, die bei 100 Hz liegt. Jeder Frequenzteiler erzeugt am oberen Ausgang 10 ein Real-Referenzsignal und am unteren Ausgang 11 ein um 90° gegen dieses phasenverschobenes Imaginär-Referenzsignal.

Die Real-Re£erenzsignale werden über einen Summierer 12 zu einem Primärstrom kombiniert, der Komponenten der Frequenzen f0, f1, f2 und f3 enthält. Mit diesem wird die Sendespule 3 beaufschlagt. Die Real-Referenzsignale bzw. die Imaginär-Referenzsignale werden auf Eingänge von phasengesteuerten Gleichrichtern 13 bis 20 gegeben, wobei die Gleichrichter 13, 15, 17, 19 in Phase mit dem Primärstrom gesteuert werden und die Gleichrichter 14, 16, 18, 20 um 90° phasenversetzt zum Primärstrom. Die als phasengesteuerte Gleichrichter ausgebildeten Projektionssignal-Bildungsmittel 13 bis 20 dienen der Projektion der an der Empfängerspule 4 anliegenden Signalspannung U auf die reale Achse (Gleichrichter 13, 15, 17, 19) bzw. auf die imagnäre Achse (Gleichrichter 14, 16, 18, 20).

Die Primärspule 3 und die Empfängerspule 4 sind nahe einem metallischen Suchobjekt 21 angeordnet. Durch Gegeninduktion entsteht in der Empfängerspule 4 eine Signalspannung U, die auf die Eingänge von Bandpässen 42 bis 45 gelegt ist. Bandpaß 43, beispielsweise, weist eine Mittenfrequenz f1 auf, so daß im wesentlichen nur Signale dieser Frequenz durch den Bandpaß zu den Gleichrichtern 15, 16 gelangen können. Entsprechendes gilt für die Bandpässe 42, 44, 45 mit den entsprechenden Frequenzen f0, f2 und f3. Die Bandpässe 42 bis 45 weisen auch Verstärkungsglieder auf, mit denen die Primärspannung U verstärkt wird. Durch die Bandpässe wird eine Aufspaltung des Spulensignals der Empfängerspule in entsprechende Frequenzanteile bewirkt, sie werden daher auch als Frequenz-Aufspaltungsmittel bezeichnet. Am Ausgang des für die Frequenz f1 durchlässigen Bandpasses 43 liegt somit der der Frequenz f1 entsprechende Anteil des ggf. verstärkten Spulensignals U an. Dieser Anteil wird auf die Eingänge der gesteuerten Gleichrichter 15, 16 gelegt. Am Ausgang des Gleichrichters 15 liegt somit das Projektionssignal UR1, das bei entsprechender Verstärkung ein gewichtetes Projektionssignal FR1 * UR1 ergibt. Die individuelle Verstärkung der Projektionssignale mit den Faktoren FR1, FI1 usw. erfolgt in Verstärkungsstufen, die in Fig. 2 in den Gleichrichter-Einheiten 13 bis 20 integriert sind. Entsprechend liegt z.B. am Ausgang des Gleichrichters 16 für den Imaginärteil das Signal FI1 * UI1 an. Entsprechendes gilt für die Ausgänge der anderen Gleichrichter 13, 14 und 17 bis 22. Das Ausgangssignal von Gleichrichter 18 beispielsweise ist FI2 * UI2. An den Ausgängen der Gleichrichter 13 bis 20 liegen somit gewichtete Projektionssignale an.

In den den Gleichrichtern 15 bis 18 nachgeschalteten Differenzbildungsgliedern bzw. Subtrahierern 22, 23 werden die Differenzsignale gemäß Gleichungen 3 und 4 gebildet, nämlich im Subtrahierer 22 das Real-Differenzsignal DR und in Subtrahierer 23 das Imaginär-Differenzsignal DIm. Diese betreffen Differenzen bezüglich der Frequenzen f1 und f2. Im Subtrahierer 24 wird entsprechend ein Signal vom Typ UR3 - UR1 und im Subtrahierer 25 Signal vom Typ UI3 - UI1 erzeugt. Diese Signale entstehen durch Differenzbildung zwischen Komponenten der ersten und der dritten Frequenz. Die entsprechenden Verstärkungsfaktoren FI bzw. FR sind aus Vereinfachungsgründen weggelassen.

Die analoge Weiterverarbeitung der durch Subtrahierer 22, 23, 24, 25 erzeugten Differenzsignale erfolgt in diesen nachgeschalteten elektronischen Funktionsblöcken. Beispielsweise wird das Ausgangssignal DR des Subtrahierers 22 an einen Eingang und das Ausgangssignal DIm des Subtrahierers 23 an den anderen Eingang eines Teilungsgliedes bzw. Divisionsgliedes 26 gelegt, das eine entsprechende Quotientenbildung DR/DIm vornimmt, wie sie für die Berechnung der Leitfähigkeit des Suchobjektes gemäß Gleichung 7 erforderlich ist. Das Ausgangssignal KRIQ des Teilungsgliedes 26 wird an einen Multiplexer 27 gegeben, über den es bei entsprechender Einstellung des Muliplexers mittels einer Analoganzeige-Einheit 28 angezeigt werden kann. Die den Substrahierern 22, 23, 24, 25 nachgeschalteten Betragsbildungseinheiten 29, 30, 31, 32 bilden aus den Differenzsignalen vom Typ DR bzw. DIm entsprechende Betragssignale. Am Beispiel des Betragsbildungsgliedes 29, das den Betrag des Ausgangssignals DR des Subtrahierers 22 erzeugt, ist zu erkennen, daß das Ausgangssignal sowohl direkt an den Multiplexer 27 gegeben wird, als auch auf den Summierer 33, dessen anderer Eingang an den Ausgang des Betragsbildners 31 angeschlossen ist, der den Betrag des Real-Differenzsignales vom Typ UR3 - UR1 aus Subtrahierer 24 bildet. Das Ausgangssignal des Summierers 33 entspricht der Summe der Beträge zweier Projektions-Differenzsignale gemäß Gleichung 12, wobei die Differenzsignale hier vom Typ eines Realsignals sind. Die entsprechende Summe von Beträgen von Imaginärsignalen wird in Summierer 34 gebildet und von dessen Ausgang an den Multiplexer 27 gegeben. Der Summierer 35 bildet die Summe aller Ausgangssignale der Betragsbildungsglieder 29, 30, 31, 32, die in verallgemeinerter Form ebenfalls in Gleichung 12 dargestellt ist.

Das Ausgangssignal DR des Subtrahierers 22 liegt außerdem am Eingang des Rechengliedes 36 an, an dessen anderen Eingang das Differenzsignal UR3 - UR1 des Subtrahierers 24 liegt. das ebenfalls vom Typ DR ist. Das Rechenglied 36 bildet ein Leitfähigkeitssignal, das aus dem Quotienten zweier Projektions-Differenzsignale berechnet wird. Es wird ein Projektions-Kombinationssignal KP gebildet, wie es beispielsweise in Gleichung 10 beschrieben ist. Beide Eingangs-Projektions-Differenzsignale sind vom Typ DR eines Realsignals. Dann wird nach Gleichung 11 die Leitfähigkeit berechnet bzw. ein entsprechendes Signal gebildet. Entsprechend bildet das Rechenglied 37 ein Projektions-Kombinationssignal KP aus dem Quotienten zweier Imaginärsignale vom Typ DIm, ebenfalls gemäß Gleichung 10. Wie aus Gleichung 11 ersichtlich ist, beinhalten die Rechenglieder 36, 37 eine Schaltung zur Berechnung einer Wurzel eines Wertes. Die Ausgangssignale der Rechner 36, 37 sind proportional der Leitfähigkeit des Suchobjektes 21 und können bei entsprechend ausgebildeter Anzeige 28 dazu verwendet werden, direkt die Metallart anzuzeigen. Über entsprechende Zuordnungstabellen läßt sich ggf. auch schon der Minentyp anzeigen. Es ist möglich, eine elektromagnetische Signatur des Suchobjektes zu erhalten, die zur Klassifizierung von Minen verwendbar ist.

Bisher wurde eine analoge Verarbeitung der Signale und eine analoge Bildung des Kombinationssignals beschrieben. Das Kombinationssignal kann alternativ oder zusätzlich auch digital gebildet werden, was nachfolgend beschrieben ist. Die Ausgangssignale der gesteuerten Gleichrichter 13 bis 18 sind in Fig. 2 an entsprechende Eingänge eines Analog/Digitalwandlers 50 angeschlossen, der die analogen Signale in digitale, von einem Mikroprozessor 51 verarbeitbare Signale umwandelt. Im Mikroprozessor 51 können alle weiter oben beschriebenen, der Projektion und ggf. Gewichtung nachgeschalteten Signalbildungsschritte digital vorgenommen und entsprechende Signale erzeugt werden, die mittels einer oder mehrerer Anzeigeeinrichtungen 52 dargestellt werden können. Die Anzeigeeinrichtung 52 kann einen Bildschirm und/oder eine oder mehrere Leuchtdiodenanordnungen aufweisen, aus der ein Bediener entsprechende Werte beispielsweise über die Größe der Signale DR, DIm, über die Summe der Beträge von DR, über die Summe der Beträge von DIm, über die Summe der entsprechenden Betragssummen, über die Leitfähigkeit, über die Permeabilität, über das Volumen des Metallstückes und ggf. über das Volumen eines detektierten Hohlraumes im Boden entnehmen kann. Weiterhin kann die Anzeigeeinrichtung beispielsweise auf einem Bildschirm Überlaufkurven 53 für Metallsignale, Bodensignale und/oder Restkurven aufweisen.

Wie gezeigt, sind die dargestellten Verfahrensschritte dafür geeignet, Signale zu liefern, die analog und/oder digital verarbeitet und ggf. aufgezeichnet werden können. Die Aufzeichnungen beispielsweise von Überlaufkurven 53 können anschließend und/oder gleichzeitig zur Suche für einen Bediener der Wirbelstromsonde sichtbar dargestellt werden, beispielsweise durch den Bildschirm 52 oder ein anderes optisches Display. Auch akustische Anzeigen sind möglich. Durch die beschriebenen Verfahren, in denen die Optimierung von Signalen durch Variation von Multiplikationsfaktoren, beispielsweise der Faktoren C1, C2 usw. erreicht werden kann, ist es beispielsweise möglich, bei einer Bilddarstellung auf einem Monitor oder dergleichen und Variation der Faktoren C1, C2 ... durch einen Bediener interaktiv das beste Nutz/Störsignalverhältnis einzustellen. Die Optimierung des Nutz/Störsignalverhältnisses durch Variation der Multiplikations- bzw. Verstärkungsfaktoren kann auch automatisch durch entsprechende Optimierungsglieder der analogen oder digitalen Schaltung der Signalauswerteeinrichtung erreicht werden.

**Patentansprüche**

1. Verfahren zum Betrieb und zur Auswertung von Signalen einer Wirbelstromsonde mit eine Suchspulenanordnung, die mindestens eine an einer Wechselstromquelle angeschlossene Sendespule und mindestens eine Empfängerspule aufweist, die mit einer Signalauswerteeinrichtung elektrisch verbunden ist und die ein einer Wechselspannung entsprechendes Spulensignal U erzeugt, mit folgenden Schritten:

- Beaufschlagung der Sendespule mit einem Primär-Wechselstrom I1, der eine Komponente einer diskreten ersten Frequenz f1 und eine Komponente mindestens einer diskreten zweiten Frequenz f2 enthält,
- Übertragung des Spulensignals zu der Signalauswerteeinrichtung,
- Aufspaltung des Spulensignals in Frequenzanteile entsprechend der ersten Frequenz f1 und der mindestens einen zweiten Frequenz f2,
- Bildung eines der ersten Frequenz f1 zugeordneten Projektionssignals und eines der zweiten Frequenz f2 zugeordneten Projektionssignals, wobei ein Projektionssignal ein Realsignal UR1 bzw. UR2 oder ein Imaginärsignal UI1 bzw. UI2 ist,
- Multiplikation der Projektionssignale mit den jeweiligen Projektionssignalen zugeordneten Faktoren FR1, FR2, FI1 bzw. FI2 zur Bildung von gewichteten Projektionssignalen $P1 = (FI1 * UI1)$ oder $(FR1 * UR1)$ oder $P2 = (FI2 * UI2)$ oder $(FR2 * UR2)$,
- Bildung mindestens zweier Differenzsignale zwischen zwei den Frequenzen f1 bzw. f2 zugeordneten gewichteten Projektionssignalen der gleichen Art (Real- oder Imaginärsignal), wobei ein Imaginär-Differenzsignal DIm gemäß

$$DIm = (FI2 * UI2) - (FI1 * UI1)$$

bzw. ein Real-Differenzsignal gemäß

$$DR = (FR2 * UR2) - (FR1 * UR1)$$

gebildet wird,
- Bildung eines von einer Linearkombination abweichenden Kombinationssignals durch Kombination von mindestens zwei Differenzsignalen der Art DIm oder DR,
- Auswertung des Kombinationssignals.

2. Verfahren nach Anspruch 1, dadurch gekennzeichnet, daß ein Imaginär-Differenzsignal DIm und ein Real-Differenzsignal DR gebildet werden und daß das Kombinationssignal ein Real-Imaginär-Kombinationssignal KRIS ist, das aus der Summe der Beträge der Differenzsignale gemäß

$$KRIS = |DIm| + |DR|$$

gebildet wird.

3. Verfahren nach Anspruch 1, dadurch gekennzeichnet, daß ein Imaginär-Differenzsignal DIm und ein Real-Differenzsignal DR gebildet werden und daß das Kombinationssignal ein Real-Imaginär-Kombinationssignal KRIQ ist, das aus dem Quotient der Differenzsignale gemäß

$$KRIQ = DIm / DR \text{ oder } KRIQ = DR / DIm$$

gebildet wird.

4. Verfahren nach einem der vorhergehenden Ansprüche, dadurch gekennzeichnet, daß der Wechselstrom I1 eine Komponente mindestens einer diskreten dritten Frequenz f3 enthält,

daß mindestens ein der dritten Frequenz zugeordnetes gewichtetes Projektionssignal $P3 = (FI3 * UI3)$ bzw. $P3 = (FR3 * UR3)$ gebildet wird,
daß aus der Differenz zweier gewichteter Projektionssignale vom Typ P1, P2, P3 ein erstes Projektions-Differenzsignal und mindestens ein davon verschiedenes zweites Projektions-Differenzsignal gebildet wird, wobei die gewichteten Projektionssignale P1, P2, P3 jeweils alle einem Realsignal oder alle einem Imaginärsignal entsprechen, und
daß das Kombinationssignal ein Projektions-Kombinationssignal KP ist, das durch Kombination von mindestens zwei Projektions-Differenzsignalen gebildet wird.

5. Verfahren nach Anspruch 4, dadurch gekennzeichnet, daß das Projektions-Kombinationssignal KP aus dem Quotient zweier Projektions-Differenzsignale gebildet wird.

6. Verfahren nach Anspruch 4, dadurch gekennzeichnet, daß das Projektions-Kombinationssignal KP durch eine Summierung der Beträge mindestens zweier Projektions-Differenzsignale gebildet wird.

7. Verfahren nach Anspruch 3 oder 5, dadurch gekennzeichnet, daß aus einem Kombinationssignal KRIQ entsprechend einem Quotienten von Differenzsignalen DIm und DR oder aus einem Kombinationssignal KP entsprechend einem Quotienten von mindestens zwei Projektions-Differenzsignalen ein frequenzspezifisches Leitfähigkeits-Signal gebildet wird.

8. Verfahren nach Anspruch 7, dadurch gekennzeichnet, daß aus Leitfähigkeits-Signalen für mindestens zwei Frequenzen ein die Frequenzabhängigkeit der Leitfähigkeit des Materials des Suchobjektes repräsentierendes Frequenzabhängigkeits-Signal gebildet wird.

9. Verfahren nach Anspruch 7 oder 8, dadurch gekennzeichnet, daß das Leitfähigkeits-Signal und/oder das Frequenzabhängigkeits-Signal zur Identifizierung des Materials des Suchobjektes verwendet werden, insbesondere bei der Minensuche.

10. Verfahren nach einem der vorhergehenden Ansprüche, dadurch gekennzeichnet, daß der Primär-Wechselstrom I1 mindestens zeitweise mindestens eine Komponente einer Niedrigfrequenz f0 enthält oder daß die Sendespule zeitversetzt zum Primärstrom I1 mindestens für ein Zeitintervall mit einem Wechselstrom I0 mit der Niedrigfrequenz f0 beaufschlagt wird, wobei die Niedrigfrequenz f0 zwischen 10 und 1000 Hz, vorzugsweise zwischen 50 und 500 Hz, insbesondere bei ca. 100 Hz liegt.

11. Verfahren nach Anspruch 10, dadurch gekennzeichnet, daß mindestens zwei unterschiedliche Niedrigfrequenzen vom Typ f0 verwendet werden und daß ein Imaginär-Differenzsignal und/oder ein Real-Differenzsignal zweier Niedrigfrequenzen gebildet wird.

12. Verfahren nach Anspruch 10 oder 11, dadurch gekennzeichnet, daß unter Verwendung eines durch mindestens eine Niedrigfrequenz bewirkten Niedrigfrequenzsignals ein Transformationssignal gebildet wird und daß mittels des Transformationssignals ein transformiertes Spulensignal gebildet wird, das im wesentlichen keinen durch eine ggf. vorhandene Magnetisierbarkeit des Suchobjektes bewirkten Signalanteil enthält.

13. Verfahren nach einem der vorhergehenden Ansprüche, dadurch gekennzeichnet, daß die Frequenzen des Primärstroms sich um vorzugsweise gleiche ganzzahlige Faktoren voneinander unterscheiden, wobei die Faktoren vorzugsweise ganzzahlige Vielfache von 2 und vorzugsweise gleich 8 sind, wobei vorzugsweise die Frequenzen durch Frequenzteilung einer Grundfrequenz gebildet werden.

14. Verfahren nach einem der vorhergehenden Ansprüche, dadurch gekennzeichnet, daß die erste Frequenz f1 zwischen 1.5 und 2.5 KHz, insbesondere 2 KHz beträgt, daß eine zweite Frequenz zwischen 12 und 20 KHz, vorzugsweise ca. 16 KHz beträgt und daß vorzugsweise eine dritte Frequenz zwischen 96 KHz und 160 KHz, vorzugsweise ca. 128 KHz beträgt.

15. Verfahren nach einem der vorhergehenden Ansprüche, dadurch gekennzeichnet, daß das Kombinationssignal ein Bodensignal UB ist, wobei das Verfahren für eine Frequenz f folgende Schritte umfaßt:

- Bildung eines projizierten Metallsignals M, das einem Realanteil oder einem Imaginäranteil eines durch ein metallisches Teil verursachten Metall-Signalanteils des Sondensignals entspricht,
- Multiplikation des projizierten Metallsignals mit einem für die Frequenz f spezifischen Faktor C zur Bildung eines gewichteten projizierten Metallsignals,
- Subtraktion des gewichteten projizierten Metallsignals von dem der Frequenz f zugeordneten gewichteten Projektionssignal, wobei das gewichtete Projektionssignal und das gewichtete projizierte Metallsignal vom selben Typ (Realsignal oder Imaginärsignal) sind.

16. Verfahren nach Anspruch 15, dadurch gekennzeichnet, daß die Bildung des projizierten Metallsignals folgende Schritte umfaßt:

- Bildung eines der elektrischen Leitfähigkeit des Metallstückes proportionalen Leitfähigkeits-Signals (L2/R2),
- Bildung eines die magnetische Kopplung zwischen Sendespule und Suchobjekt und zwischen Suchobjekt und Empfängerspule repräsentierenden Kopplungssignals GI, das bezüglich der Imaginärachse und der Frequenz f1 wie folgt gebildet wird:

$$GI = DIm/(G * (1/(S+1) - V21^2)/(S+V21^2))$$

mit $G = FI1 * f1 * I11$, wobei $I11$ die Amplitude des Primärstroms der Komponente der ersten Frequenz f1 ist;

$$S = (R2/(f1 * L2))^2;$$

$$V21 = f2/f1$$

-   Bildung des projizierenden Metallsignals, das bezüglich der Imaginärachse und der Frequenz f1 wie folgt gebildet wird,

$$UI1 = (GI/FI1) * G * (1/(S+1))$$

17. Vorrichtung zur Bodenerkundung und Fremdkörperdetektion in einem Suchbereich, insbesondere Minensuchgerät, mit mindestens einer Wirbelstromsonde mit einer Suchspulenanordnung (1), die mindestens eine an eine Wechselstromquelle (2) angeschlossene, mit Primär-Wechselstrom mit einer Komponente einer ersten Frequenz f1 und mindestens einer zweiten Frequenz f2 beaufschlagbare Sendespule (3) und mindestens eine Empfängerspule (4) aufweist, die mit einer Signalauswerteeinrichtung (5) elektrisch verbunden ist und die insbesondere bei Annäherung an ein elektrisch leitendes Suchobjekt (21) ein einer Wechselspannung entsprechendes Spulensignal U erzeugt, dadurch gekennzeichnet, daß die Signalauswerteeinrichtung folgende Elemente aufweist:

    -   Frequenz-Aufspaltungsmittel (42 bis 45) zur Aufspaltung des Spulensignals in Frequenzanteile entsprechend der ersten Frequenz f1 und der mindestens einen zweiten Frequenz f2,
    -   Projektionssignal-Bildungsmittel (13 bis 20) zur Bildung eines der ersten Frequenz f1 zugeordneten Projektionssignals und eines der mindestens einen zweiten Frequenz f2 zugeordneten Projektionssignals,
    -   Verstärkungsmittel zur Multiplikation der Projektionssignale mit den jeweiligen Projektionssignalen zugeordneten Faktoren FR1, FR2, FI1 bzw. FI2 zur Bildung von gewichteten Projektionssignalen,
    -   mindestens zwei Differenzbildungsglieder (22 bis 25) zur Bildung mindestens zweier Differenzsignale DIm bzw. DR zwischen zwei den Frequenzen f1 bzw. f2 zugeordneten gewichteten Projektionssignalen der gleichen Art (Real- oder Imaginärsignal), und
    -   den Differenzbildungsgliedern nachgeschaltete Kombinationssignal-Bildungsmittel zur Bildung eines Kombinationssignals durch Kombination von mindestens zwei Differenzsignalen der Art DIm oder DR in einer von einer einfachen Linearkombination abweichenden Weise.

18. Vorichtung nach Anspruch 17, dadurch gekennzeichnet, daß die Kombinationssignal-Bildungsmittel mindestens ein einem Differenzbildungsglied vorzugsweise direkt nachgeschaltetes Betragsbildungsglied (29 bis 32) aufweisen, wobei vorzugsweise jedem Differenzbildungsglied ein Betragsbildungsglied nachgeschaltet ist.

19. Vorrichtung nach Anspruch 18, dadurch gekennzeichnet, daß die Ausgänge von mindestens zwei Betragsbildungsgliedern (29 bis 32) mit Eingängen eines Summationsgliedes (33 bis 35) verbunden sind.

20. Vorrichtung nach einem der vorhergehenden Ansprüche, dadurch gekennzeichnet, daß die Kombinationssignal-Bildungsmittel mindestens ein Divisionsglied (26) mit mindestens zwei Eingängen aufweisen, wovon ein Eingang mit dem Ausgang einer zur Bildung eines Imaginär-Differenzsignales ausgebildeten Differenzbildungsgliedes (23) und ein Eingang mit dem Ausgang eines zur Bildung eines Real-Differenzsignales ausgebildeten Differenzbildungsgliedes (22) verbunden ist.

21. Vorrichtung nach einem der vorhergehenden Ansprüche, dadurch gekennzeichnet, daß die Kombinationssignal-Bildungsmittel mindestens ein, vorzugsweise zwei Rechenglieder (36, 37) mit mindestens einem ersten und mindestens einem zweiten Eingang aufweisen, wobei der erste und der zweite Eingang mit den Ausgängen zweier verschiedener Differenzbildungsglieder (23, 25) zur Bildung eines Imaginär-Differenzsignales oder mit den Ausgängen zweier verschiedener Differenzbildungsglieder (22, 24) zur Bildung eines Real-Differenzsignales verbunden sind.

Fig . 1

Fig. 2